Europäisches Patentamt

European Patent Office

Office européen des brevets

(19)

(11) Veröffentlichungsnummer: **0 002 819**
**A1**

# (12) EUROPÄISCHE PATENTANMELDUNG

(21) Anmeldenummer: **78101818.9**

(51) Int. Cl.²: **F 02 M 25/02, F 23 L 7/00**

(22) Anmeldetag: **22.12.78**

(30) Priorität: **03.01.78 CH 45/78**

(71) Anmelder: **Rawyler-Ehrat, Ernst, Kometsträsschen 40, CH-8200 Schaffhausen (CH)**

(43) Veröffentlichungstag der Anmeldung: **11.07.79 Patentblatt 79/14**

(72) Erfinder: **Rawyler-Ehrat, Ernst, Kometsträsschen 40, CH-8200 Schaffhausen (CH)**

(74) Vertreter: **Blum, Rudolf E. et al, c/o E. Blum & Co Patentanwälte Vorderberg 11, CH-8044 Zürich (CH)**

(84) Benannte Vertragsstaaten: **BE DE FR GB IT LU NL SE**

(54) Verfahren zur Verbesserung von Verbrennungsprozessen.

(57) Bei dem Verfahren zur Verbesserung von Verbrennungsprozessen führt man einem Gemisch aus Luft und Kohlenwasserstoffverbindungen in einem Brennraum vor der Verbrennung Wasserdampf zu, um den Verbrennungsablauf wesentlich zu verbessern, weil Wasserdampf im Gegensatz zur Luft einen wesentlich höheren Sauerstoffgehalt hat. Bei der Verbrennung werden Katalysatoren, wie Graphit und/oder Eisenschwamm usw., eingesetzt, um die Dissoziation des Wassers in $H_2 + O_2$ zu begünstigen. Das Verfahren kann ohne besondere konstruktive Änderungen bei Verbrennungsmotoren, Verbrennungsanlagen und Öfen angewendet werden.

EP 0 002 819 A1

Verfahren zur Verbesserung von Verbrennungsprozessen

----------------------------------------

Die Erfindung bezieht sich auf ein Verfahren zur Verbesserung von Verbrennungsprozessen bei einem Gemisch aus Luft und Kohlenwasserstoffverbindungen in einem Brennraum.

Bekanntlich beruht die klassische Verbrennung von Kohlenwasserstoffen, wie z.B. Oel, Benzin, Butan, Propan usw. auf einer möglichst feinen Zerstäubung mit Luft.

Theoretisch enthalten die Verbrennungsgase, z.B. von Heizöl, bei stöchiometrischer Verbrennung ausschliesslich Kohlendioxid ($CO_2$), Wasserdampf ($H_2O$), Schwefeloxid ($SO_2$) und den mit der Verbrennungsluft zugeführten Stickstoff ($N_2$).

In der Praxis sind diese Idealbedingungen jedoch nicht erzielbar, weil trotz oder infolge Verbrennung mit Luftüberschuss die Verbrennungsgase (Abgase) un- und teilverbrannte Fraktionen, wie z.B. Kohlenstoff (C) als Russ, Kohlenmonoxid (CO) und verschiedene Olefine enthalten, überdies höher oxydierte Substanzen, wie Schwefeltrioxid ($SO_3$) und Stickoxide ($NO_3$), ferner Asche und Brennstoffverunreinigungen und Restsauerstoff ($O_2$).

Bei einem anderen, bekannten Verfahren wird der Brennstoff mit Wasser zu einer Emulsion vermischt, wodurch der Verbrennungsablauf verbessert wird. Hierfür müssen spezifische Bedingungen beim Mischen der Verbrennungsluft mit der Emulsion eingehalten werden.

Hier will die Erfindung Abhilfe schaffen. Die Erfindung, wie sie in den Ansprüchen gekennzeichnet ist, löst die Aufgabe, ein Verfahren zur Verbesserung von Verbrennungsprozessen zu schaffen, bei welchen zur Erzeugung der gleichen Wärmemenge weniger Brennstoff benötigt und der Ausstoss von umweltverschmutzenden Stoffen vermindert wird.

Die durch die Erfindung erreichten Vorteile sind, dass der Verbrennungsablauf wesentlich verbessert werden kann, weil Wasserdampf, ca. 89% Sauerstoff ($O_2$) und ca. 11% Wasserstoff ($H_2$) enthält.

Durch die Anwendung von Katalysatoren, insbesondere Graphit und/oder Eisenschwamm oder Molybdänverbindungen, kann die Dissoziation des Wasserdampfes in $H_2 + O_2$ begünstigt werden.

Als vorteilhaft erweist es sich ferner, wenn der Wasserdampf durch die Abwärme des Verbrennungsprozesses erzeugt werden kann, wobei die Menge zugeführten Wasserdampfes geregelt wird.

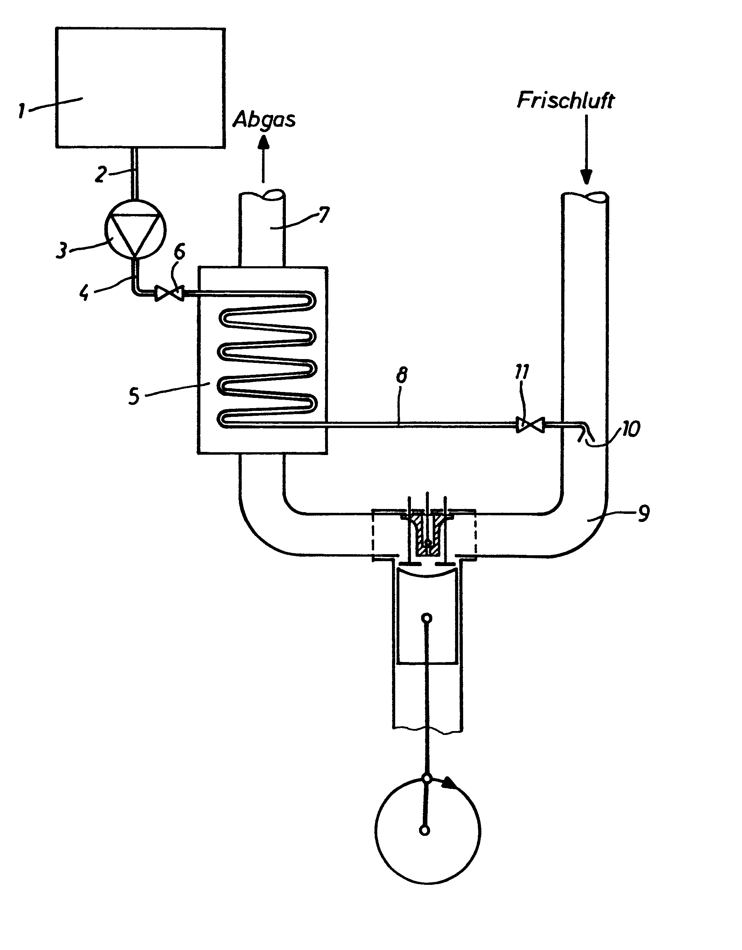

Im folgenden ist ein Ausführungsbeispiel des Erfindungsgegenstandes anhand der beiliegenden Zeichnung näher erläutert.

Das erfindungsgemässe Verfahren wird anhand eines Dieselmotors beschrieben. Die Zeichnung zeigt in schematischer Darstellung ein Ausführungsbeispiel einer Anordnung zur Durchführung des Verfahrens. Zum besseren Verständnis wurde dabei nur ein Zylinder der Arbeitsmaschine dargestellt. Auf eine Beschreibung der Arbeitsmaschine und ihrer Funktion wird bewusst verzichtet, da für das erfindungsgemässe Verfahren an der Arbeitsmaschine keine wesentlichen Veränderungen vorgenommen werden müssen.

Zur Erzeugung des Wasserdampfes wird ein Wasserbehälter 1 vorgesehen, der über eine Rohrleitung 2 an die Saugseite einer Pumpe 3 angeschlossen ist. Die Druckseite der Pumpe 3 ist über eine Rohrleitung 4 an den Einlassstutzen eines Wärmeaustauschers 5 angeschlossen. An der Druckseite der Pumpe 3 ist ein Rückschlagventil 6 vorgesehen.

Der Wärmeaustauscher 5 ist am Auspuffrohr 7 der Arbeitsmaschine angeordnet und durch geeignete Mittel an diesem befestigt.

An den Auslassstutzen des Wärmeaustauschers 5 ist eine Rohrleitung 8 angeschlossen, die in das Ansaugrohr 9 der Arbeitsmaschine eingeführt ist. Am Ende dieser Rohrleitung 8 ist ein düsenförmiges Organ 10 angeordnet. In diese Rohrleitung 9 ist ferner ein Regulierventil 11 eingebaut.

Das Wasser aus dem Behälter 1 wird von der Pumpe 3 in den Wärmeaustauscher 5 gefördert. Das Wasser wird durch die Abwärme des Auspuffrohres 7 in Wasserdampf überführt. Der Wasserdampf wird über die Rohrleitung 8 in das Ansaugrohr 9 gefördert und tritt durch das düsenförmige Organ 10 aus. Dabei vermischt sich der Wasserdampf mit der Frischluft. Die Dampfzufuhr wird mit dem Regulierventil 11 reguliert.

Durch das Einbringen von Wasserdampf, der ca. 89% Sauerstoff ($O_2$), ca. 11% Wasserstoff ($H_2$) und keinen Stickstoff ($N_2$) enthält, steht der Flamme wesentlich mehr Sauerstoff zur Verfügung.

Um die Dissoziation von Wasserdampf in $H_2$ und $O_2$ zu begünstigen, werden Katalysatoren verwendet. Im vorliegenden Beispiel wird dabei der Umstand ausgenützt, dass in Anwesenheit von glühendem Kohlenstoff die Dissoziation von Wasserdampf schon bei Temperaturen von 400-800°C vor sich geht und so eine grosse Menge aktiven Sauerstoffes zur Aktivierung des Verbrennungsvorganges zur Verführung steht.

Eine derart ablaufende Verbrennung hat den Vorteil, dass die Menge un- und teilverbrannter Fraktionen, wie Russ, Kohlenmonoxid, Olefine usw. beträchtlich verringert wird. Die Emission von Schwefeloxiden wird ebenfalls verringert.

Da der Anteil der in den Verbrennungsraum gelangenden Luft verringert wird, wird auch der Anfall von Stickstoffoxiden vermindert.

Das hier in Rede stehende erfindungsgemässe Verfahren kann auch bei anderen Verbrennungsanlagen und Oefen angewendet werden. In diesen Fällen kann die Zudosierung des Wasserdampfes durch eine dem jeweiligen Anwendungsfall angepasste Vorrichtung, z.B. Strahlapparate, Turbulenzgeneratoren, Mischdüsen usw., erfolgen.

- 1 -

P a t e n t a n s p r ü c h e
--------------------------------

1. Verfahren zur Verbesserung von Verbrennungsprozessen, bei einem Gemisch aus Luft und Kohlenwasserstoffverbindungen in einem Brennraum, dadurch gekennzeichnet, dass man dem Gemisch vor der Verbrennung Wasserdampf zuführt.

2. Verfahren nach Anspruch 1, dadurch gekennzeichnet, dass der Wasserdampf vor der Gemischbildung zugeführt wird.

3. Verfahren nach Anspruch 1, dadurch gekennzeichnet, dass der Wasserdampf nach der Gemischbildung zugeführt wird.

4. Verfahren nach den Ansprüchen 1-3, dadurch gekennzeichnet, dass zur Verbrennung Katalysatoren eingesetzt werden, um die Dissoziation des Wasserdampfes in $H_2+O_2$ zu begünstigen.

5. Verfahren nach Anspruch 4, dadurch gekennzeichnet, dass Graphit und/oder Eisenschwamm als Katalysator verwendet wird.

Hb/mae
18.12.78

EU 1015

6. Verfahren nach Anspruch 4, dadurch gekennzeichnet, dass Molybdänverbindungen als Katalysatoren verwendet werden.

7. Verfahren nach Anspruch 4, dadurch gekennzeichnet, dass Metalloxid und/oder Metallhydroxid als Katalysator verwendet wird.

8. Verfahren nach Anspruch 4, dadurch gekennzeichnet, dass Platinschwamm als Katalysator verwendet wird.

9. Verfahren nach Anspruch 1, dadurch gekennzeichnet, dass der Wasserdampf durch die Abwärme des Verbrennungsprozesses erzeugt wird.

10. Verfahren nach Anspruch 1, dadurch gekennzeichnet, dass die Menge des zugeführten Wasserdampfes geregelt wird.

0002819

Abgas

Frischluft

Europäisches
Patentamt

**EUROPÄISCHER RECHERCHENBERICHT**

0002819
Nummer der Anmeldung
EP 78 10 1818

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | DE - A - 2 546 059 (LINDBERG) <br> * Ansprüche 1,2,17,18,24,27,29, 37; Seite 45, letzter Absatz; Seite 46, Absätze 1,2; Seite 47, Absatz 2 * | 1,3-5, 9,10 |
|  | DE - A - 2 535 041 (LOOSSEN) <br> * Seite 1, "Prinzip des Kraftstoffzusatzsystemes", Absatz 1; Ansprüche 1,2,4 * | 1,3,9 |
|  | DE - A - 2 645 237 (KAHLOW) <br> * Seite 1, Hauptanspruch; Seite 5, letzter Absatz; Seite 6, Absatz 1 * | 1,3,9 |
|  | FR - A - 2 264 182 (DE PENFENTENYO) <br> * Seite 1, Zeilen 38-40; Seite 2, Zeilen 1-18; Seite 6, Anspruch 1 * | 1,2,9 |
|  | FR - A - 2 190 159 (WHITTLESEY) <br> * Seite 6, Ansprüche 1,2 * | 1,2,9 |
|  | DE - A - 2 445 761 (BHARATI) <br> * Seite 7, Ansprüche 1-3 * | 1,4,5, 9 |
| X | FR - A - 2 318 318 (SUGIMOTO) <br> * Seite 6, Zeilen 15-35; Seite 7, Zeilen 34-40; Seite 8, <br> ./. | 1,3,4, 9,10 |

**KLASSIFIKATION DER ANMELDUNG (Int.Cl.²)**

F 02 M 25/02
F 23 L 7/00

**RECHERCHIERTE SACHGEBIETE (Int. Cl.²)**

F 02 M 25/02
   27/02
F 23 L 7/00
F 02 B 51/02

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 22-02-1979 | JORIS |

EPA form 1503.1 06.78

| EINSCHLÄGIGE DOKUMENTE | | | KLASSIFIKATION DER ANMELDUNG (Int.Cl.²) |
|---|---|---|---|
| Kategorie | Kennzeichnung des Dokuments mit Angabe, soweit erforderlich, der maßgeblichen Teile | betrifft Anspruch | |
| | Zeilen 1–40; Seite 9, Zeilen 1–10; Seite 13; Ansprüche 1,4; Seite 14, Anspruch 6 *<br><br>--- | | |
| X | FR – A – 2 292 118 (MANASSA)<br>* Seite 4, Zeilen 15–40; Seite 5, Zeilen 1–17,34–40; Seite 6, Zeilen 15–22; Ansprüche 1,3,5, 8,10,11 *<br><br>--- | 1–4,9, 10 | |
| X | US – A – 2 460 700 (LYONS)<br>* Spalte 1, Zeilen 1–10; Spalte 2, Zeilen 1–5,9–14; Spalte 3, Zeilen 14–27; Spalte 4, Zeilen 41–75; Spalte 5, Zeilen 1–14 *<br><br>--- | 1,3,4, 6,7 | RECHERCHIERTE SACHGEBIETE (Int. Cl.²) |
| | GB – A – 129 963 (ROBIN)<br>* Seite 3, Zeilen 42–56 *<br><br>--- | 1,3–5 | |
| | FR – A – 666 684 (EVENO)<br>* Seite 3, Zeilen 37–104 *<br><br>--- | 1,3–5 | |
| | DE – A – 2 345 440 (METALLGESELL-SCHAFT)<br>* Seite 4, Zeilen 6–18,25–34; Seite 5, Absatz 1; Seite 6, Absatz 2 *<br><br>--- | 1,8 | |
| | BE – A – 533 238 (SPRENGER)<br>* Seite 1, Zeilen 21–40; Seite 2, Zeilen 20–29,35 *<br><br>---        ./. | 1,4,5 | |

| EINSCHLÄGIGE DOKUMENTE | | | KLASSIFIKATION DER ANMELDUNG (Int.Cl.²) |
|---|---|---|---|
| Kategorie | Kennzeichnung des Dokuments mit Angabe, soweit erforderlich, der maßgeblichen Teile | betrifft Anspruch | |
| | <u>DE - C - 466 478</u> (CATALEX) <br> * Seite 1, Zeilen 3-11,47-54; Seite 2, Zeilen 8-36 * <br> — | 1,3,4, 7 | |
| | <u>FR - A - 2 324 884</u> (TOUFLET) <br> * Seite 1, Zeilen 9-24 * <br> — | 1,4,8 | |
| | <u>BE - A - 838 254</u> (DELBRUYERE) <br> * Seite 1 * <br> — | 1,4,7 | **RECHERCHIERTE SACHGEBIETE (Int. Cl.²)** |
| A | <u>BE - A - 511 162</u> (WALCKIERS) <br> * Seite 3; Ansprüche 1,3 * <br> — | 1,4,5 | |
| A | <u>FR - A - 835 453</u> (BURRY) <br> * Seite 1, Zeilen 1-12; Seite 2, Zeilen 9-62 * <br> — | 1 | |
| A | <u>US - A - 4 003 343</u> (LEE) <br> * Zusammenfassung; Spalte 4, Zeilen 18-35 * <br> ——— | 1,4,7 | |